# EUROPEAN PATENT APPLICATION

(11) **EP 2 189 944 A1**
(43) Date of publication of application: **26.05.2010**
(21) Application number: 08830919.0
(22) Date of filing: 10.09.2008
(51) Int. Cl.: G06T 7/60

(54) **IMAGE PROCESSING DEVICE AND IMAGE PROCESSING METHOD**

(30) Priority: 11.09.2007 CN 200710148756
(71) Applicant: Panasonic Corporation, Kadoma-shi Osaka 571-8501 (JP)
(72) Inventor: XIE, Xiaohui, Beijing (CN); LIU, Weijie, Beijing (CN); WU, Gang, Beijing (CN); XU, Ming Qiang, Beijing (CN)
(74) Representative: Grünecker, Kinkeldey, Stockmair & Schwanhäusser Anwaltssozietät
(86) International application number: PCT/JP2008/002505
(87) International publication number: WO 2009/034709

(57) **Abstract**

An image processing apparatus can accurately perform fast shape detection or shape tracking with respect to images having low quality or small sizes. Image processing apparatus (100) employs a configuration having: sample point setting section (102) that sets a plurality of sample points in a search area; candidate shape generating section (103) that sets a plurality of designated directions depending on the target shape, searches for edge points in the image along the plurality of designated directions from sample points and generates candidate shapes formed with straight lines passing the detected edge points; vote map generating section (104) that generates a vote map in which the candidate shapes vote for positions of feature points of candidate shapes; and shape feature point detecting section (105) that determines the feature point of the target shape based on the vote result with respect to the feature points in the vote map.

## Description

### Technical Field

The present invention relates to an image processing apparatus and method for detecting or tracking a specific shape from a captured image at high speed. In particular, the present invention relates to an apparatus and method for detecting or tracking a specific shape of fixed outline such as traffic signs, from a captured image.

### Background Art

Up till now, image processing apparatuses for detecting or tracking specific shapes from captured images are widely used. For example, in image processing apparatuses used in FA (Factory Automation), identification of misselected parts and identification of defects is made possible by detecting the shapes of parts continuously. Further, even in recognition of guide signs by recent robot navigations and recognition of buildings by remote sensing, detection and tracking of specific shapes are utilized.

Further, to assist driving, there are apparatuses that recognize traffic signs and notify information about the recognized traffic signs to the driver or utilize the information about the traffic signs in vehicle control. A sign recognition apparatus recognizes a traffic sign by capturing an image from the front by a camera, extracting the image of an candidate area including a specific shape used in traffic signs from the captured image, and performing pattern matching processing using the extracted image of the candidate area and template images of traffic signs. Automatic identification processing for traffic signs is an important part of the ITS system. Accurate identification of traffic signs leads to a decreased probability of traffic accidents and an improved security. Further, by identifying traffic signs, more information is provided to the driver, and, as a result, it is possible to reduce fatigue of the driver and provide a comfortable driving environment.

Thus, detection and tracking of specific shapes are important techniques in many fields, and therefore various apparatuses and methods for detecting and tracking specific shapes are proposed.

For example, Patent Document 1 and Patent Document 2 particularly disclose a technique for utilizing a particle filter to track shapes. In Patent Document 1, first, in the search range, a plurality of rectangular blocks are generated randomly in the constant degree of dispersion. Next, these blocks are matched to a model of the search target using features such as a color histogram, and the probability that each block is a tracking target is calculated as a matching probability. Next, the target position is estimated based on the centroid of the plurality of calculated matching probabilities.

Further, Patent Document 3 discloses a technique for tracking shapes using edge matching. According to Patent Document 3, first, an edge model of the target is calculated and the result is projected on an input image. Next, in a specific area of the projection point of the edge model, edge points in the input image are searched and organized. Next, the likelihoods of the tracking target are calculated using the organized parameters, and the position of a tracking shape is estimated by combining the calculated likelihoods.

Further, Patent Document 4 discloses a method for detecting a shape based on votes by edge points in an image. According to Patent Document 4, all edge points in an image vote for line segments vertical to the edge directions to create a vote map. Further, a polygon or the like is detected by classifying the peak position of voted points and the directions of the edge points that vote for the peak position.
Patent Document 1: Japanese Patent Application Laid-open No.2005-149509
Patent Document 2: Japanese Patent Application Laid-open No.2005-70043
Patent Document 3: Japanese Patent Application Laid-open No.2006-285358
Patent Document 4: International Publication No.2008/010488 Pamphlet (WO, A1)
Non-Patent Document 1: CUI YI, "Image processing and Analyzing - Method and Application of Mathematical Morphology" (China, Science Publishing Company, 2000)

### Disclosure of Invention

### Problem to be Solved by the Invention

By the way, the techniques disclosed in Patent Documents 1 and 2 utilize a plurality of blocks. Therefore these techniques are suitable to images having clear component structures, but it is difficult to apply these techniques to traffic signs and images having a small size. Further, block features of a local integration type such as a color histogram are utilized, and, consequently, it is difficult to detect and track outlines.

Further, the technique disclosed in Patent Document 3 premises the existence of a high-quality edge image, and, consequently, is difficult to apply to low-quality images. Further, although a close relationship is required between the projection position of an edge model of the tracking target and the edge distribution in an input image, it is not possible to guarantee the relationship by a camera mounted on a vehicle because road conditions and driving conditions change. Further, although likelihood calculation has an advantage for non-rigid bodies, in a case of rigid bodies such as traffic signs, there are few local edge features, and, consequently, accurate likelihood calculation is difficult.

According to the techniques disclosed in Patent Document 4, voting is performed from all edge points, and, consequently, a specific shape that is not present actually, may be detected. Further, it takes long time for voting from all edge points and for operations such as a search for the maximum value of the number of votes, and, consequently, the speed of executing algorithms may decrease. Therefore, it is difficult to realize higher speed.

In particular, image tracking processing at further higher speed is demanded. Further, in particular, in image tracking processing for cars, an apparatus and method are demanded for performing fast tracking processing for even images having low quality or small sizes.

Taking into account the above-noted points, the present invention provides an image processing apparatus and image processing method for accurately performing fast shape detection or shape tracking with respect to images having low quality or small sizes.

### Means for Solving the Problem

In an aspect, the image processing apparatus of the present invention employs a configuration having: a search area setting section that sets a search area from a captured image; a sample point setting section that sets a plurality of sample points in the search area; a candidate shape generating section that sets a plurality of designated directions according to a target shape, searches for edge points in the image along the plurality of designated directions from the sample points, and generates candidate shapes formed with straight lines passing the edge points detected; a vote map generating section that generates a vote map in which the candidate shapes vote for positions of feature points of the candidate shapes; and a shape feature point detecting section that determines a feature point of the target shape based on a vote result for the feature points in the vote map.

### Advantageous Effect of the Invention

According to the present invention, it is possible to accurately perform fast shape detection or shape tracking with respect to images having low quality or small sizes.

### Brief Description of Drawings

FIG.1 is a block diagram showing the configuration of an image processing apparatus according to Embodiment 1 of the present invention;
FIG.2A illustrates a search area;
FIG.2B illustrates sample points;
FIG.2C illustrates designated directions (search directions);
FIG.2D illustrates candidate shapes;
FIG.2E illustrates feature points of candidate shapes;
FIG.3 is a flowchart for illustrating operations in Embodiment 1;
FIG.4A illustrates an example of a traffic sign having two inner and outer triangles each comprised of parallel three sides;
FIG.4B illustrates the centroid of a traffic sign having two inner and outer triangles each comprised of parallel three sides;
FIG.5 is provided to explain Embodiment 2;
FIG.5A illustrates a search area and a target quadrilateral;
FIG.5B illustrates a search for edge points along designated directions and a generation of candidate shapes;
FIG.5C illustrates feature points (intersection of diagonals) of candidate shapes;
FIG.6 is provided to explain Embodiment 3;
FIG.6A and FIG.6B illustrate designated directions (search directions);
FIG.6C illustrates a search for edge points, edge directions and center candidate;
FIG.7 is provided to explain Embodiment 4;
FIG.7A illustrates processing for separating a target shape into partial shapes;
FIG.7B illustrates the feature point of each partial shape (the center point of each inscribed circle);
FIG.8A and FIG.8B each illustrate an example of skeletons;
FIG.9 illustrates a flowchart showing processing steps in Embodiment 4; and
FIG.10 is a block diagram showing the configuration for realizing processing in Embodiment 4.

### Best Mode for Carrying Out the Invention

The present invention provides an apparatus and method for detecting or tracking shapes comprised of combinations of line segments, from an image.
A combination of line segments means that the outline of an image that is the detection target includes one or more line segments. The outline may be in an opened shape or closed shape. Although the present invention is applicable to both shape detection and shape tracking, in particular, the present invention can realize fast processing, and, consequently, is suitable to a shape tracking requiring fast processing.

Embodiments of the present invention will be explained below in detail with reference to the accompanying drawings.

### (Embodiment 1)

For ease of explanation, an example of detecting and tracking a regular triangle will be explained. Further, assume that one side of the regular triangle is positioned above horizontally.

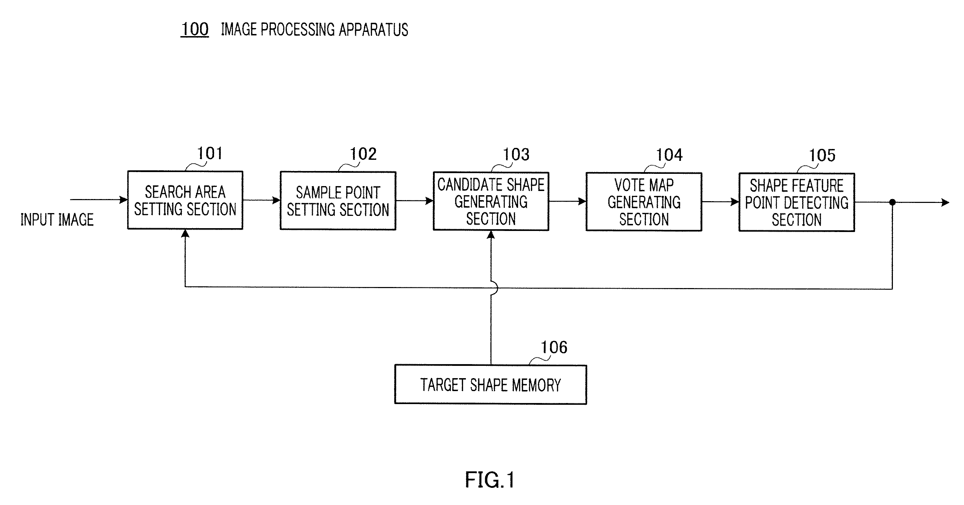

FIG.1 illustrates the configuration of the image processing apparatus according to the present embodiment. In FIG.1, in image processing apparatus 100, a frame image is inputted in search area setting section 101 as an input image.

Search area setting section 101 sets a predetermined area of the input image as a search area. When shape detection is performed, that is, when the position of the target shape is not detected in an earlier frame than the current frame, search area setting section 101 sets the whole image as the search area. On the other hand, when shape tracking is performed, that is, when the position of the target shape is detected in the earlier frame, search area setting section 101 sets a neighboring area including the detection position as the search area. Upon performing shape tracking, search area setting section 101 sets a search area based on an output of shape feature point detecting section 105.

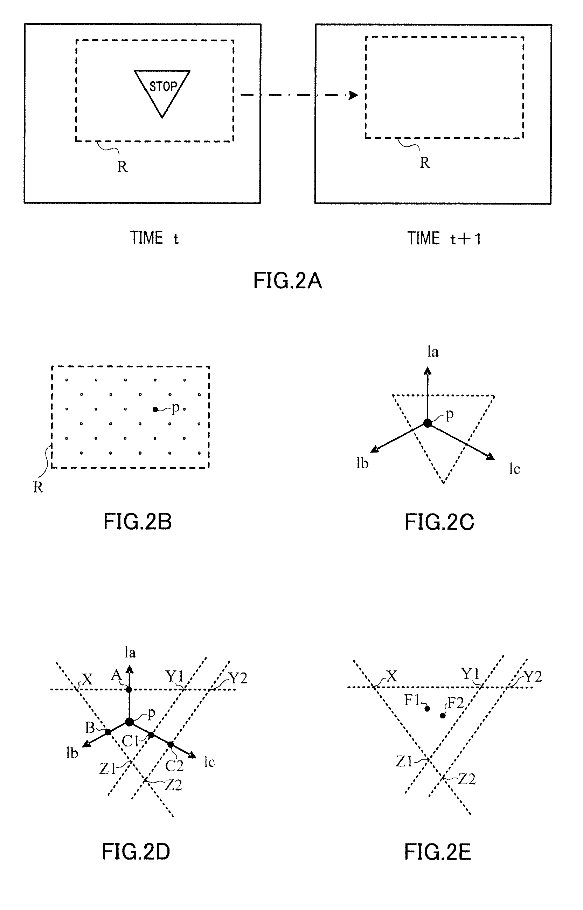

For example, as shown in FIG.2A, when a traffic sign "stop" is detected in the frame of time t, search area setting section 101 sets neighboring area R including the position at which the traffic sign "stop" is detected, as search area R in the frame of time t+1. Here, search area R roughly shows a range in which the target shape is present, and needs not show, for example, the moving pattern and probability distribution of the target shape. Further, the scale of search area R is preferably determined taking into account the moving direction and speed of the target shape. Further, the scale of search area R influences the number of sample points which will be described later, a calculation time for shape detection and a calculation time for shape tracking, and consequently, is preferably set taking into account these. Further, in the figure, although search area R is a rectangular shape, search area R may be other shapes than the rectangle. Further, the image of the frame of time t+1 and the image of the frame of time t may be the same image.

Sample point setting section 102 selects a plurality of sample points from pixel points provided in the search area, and set the plurality of sample points. FIG.2B illustrates a state of the sample points. In FIG.2B, although only one sample point is shown with reference mark p, all of the points illustrated in FIG.2B are sample points p. For example, it is possible to set as sample points p all pixel points illustrated by dots in search area R in FIG.2B. Further, a sample point is not limited to a pixel point and may be any points in the search area. Intervals between sample points p may be regular intervals or irregular intervals.

Candidate shape generating section 103 receives as input position information of sample points from sample point setting section 102 and target shape information. The target shape information relates to a specific shape stored in target shape memory 106. In the case of the present embodiment, target shape memory 106 stores information about a plurality of traffic signs as target information, and sample point setting section 102 reads out target shape information from a plurality of traffic signs. For example, if a shape to be detected or tracked is determined, target shape information about the detection or tracking target is read out. By contrast, if a shape to be detected or tracked is not determined, target shape information may be read out sequentially from the plurality of traffic signs.

First, candidate shape generating section 103 sets designated directions to detect edges, based on the target shape information. Further, candidate shape generating section 103 searches for edge points in the image along the designated direction starting from the sample point.

FIG.2C shows a detailed example. Candidate shape generating section 103 searches for edge points along three designated directions la, 1b and 1c from sample point p. The search range is search area R set in search area setting section 101. According to the present embodiment, the designated directions are set vertical to the sides of the target shape to be detected or tracked. For example, when the target shape is a regular triangle such as the sign "stop" shown in FIG.2A, three directions passing the three sides of the regular triangle from the inside, that is, the directions of 90 degrees (la), 210 degrees (1b) and 330 degrees (1c) are set as designated directions. Candidate shape generating section 103 searches for edge points along direction la, direction 1b and direction 1c starting from sample point p.

Next, candidate shape generating section 103 generates a candidate shape based on the detected edge points. FIG.2D shows a detailed example. If edge point A in direction la, edge point B in direction 1b and edge points C 1 and C2 in direction 1c are detected, candidate shape generating section 103 generates a shape formed with lines passing the detected edge points, as a candidate shape of the target shape. In the example shown in FIG.2D, the target shape is a regular triangle and the designated directions are three directions passing the three sides of the regular triangle vertically from the inside, and, consequently, candidate shape generating section 103 generates shapes formed with a plurality of lines passing the detected edge points vertically in the designated directions, as candidate shapes. In the example shown in FIG.2D, triangle XY1Z1 and triangle XY2Z2 are generated as candidate shapes.

Candidate shape generating section 103 performs this processing for generating candidate shapes, with respect to all sample points.

Vote map generating section 104 generates a vote map showing the level of support by a plurality of candidate shapes, by finding a feature point of candidate shapes and further using a method of voting. A feature point is preferably a point having uniqueness for the target shapes. In the case of a triangle, for example, the centroid and the orthocenter are points having uniqueness, and, consequently, the centroid or the orthocenter may be found as a feature point. Here, in the vote map generated in vote map generating section 104, all candidate shapes vote one vote for their feature points, respectively. For example, as shown in FIG.2F, one vote is voted to centroid F1 from triangle XY1Z1 that is a candidate shape having F1, and one vote is voted to centroid F2 from triangle XY2Z2 that is a candidate shape having F2.

Vote map generating section 104 counts vote results from all the candidate shapes generated in candidate shape generating section 103 based on all the sample points set in sample point setting section 102. To be more specific, for example, vote map generating section 104 calculates the number of votes for each pixel by limiting the positions in which a feature point can be present to pixel positions and counting the number of votes acquired in each pixel.

Shape feature point detecting section 105 determines a feature point of the shape to be detected or tracked, based on the count results in the vote map. To be more specific, shape feature point detecting section 105 detects the pixel position (feature point position) where the local peak of the number of votes (i.e., vote number peak) is acquired, from the vote map, and, when the number of votes in the pixel position is greater than threshold Th, shape feature point detecting section 105 determines the pixel position as the feature point position of the target shape.

Further, a shape determining section that specifies the position of the target shape based on the feature point detected in shape feature point detecting section 105, may be provided after shape feature point detecting section 105. As described above, a feature point is a point having uniqueness such as the centroid and the orthocenter, and the target shape is determined. Consequently, the shape determining section can specify the position of the target shape from these information.

Here, the above-described vote number peak may be detected as follows. For example, if a vote threshold is Th, sample points are positioned at regular intervals and the number of voting samples is greater than Th*a, a peak is detected. Here, "Th^{*}a" is determined by image quality. As a result of performing simulation, when 0.4<Th^{*}a<=0.8 is set, it is acknowledged that processing speed and processing accuracy are both improved.

By the way, the position of each candidate shape generated in candidate shape generating section 103 is generally various, and, consequently, the feature point position varies between candidate shapes. However, candidate shapes generated based on sample points inside a target triangle to be detected, normally include many candidate shapes that form true edge points in the triangle, and, as a result, the number of votes for feature points of the candidate shapes that form the true edge points is the local peak. Therefore, it is possible to find the position of the feature point of the target triangle from the local peak and specify the position of the target triangle from the position of the feature point.

On the other hand, if the target shape is not present in search area R, the distribution of edge points and the positions of candidate triangles are randomized, and, consequently, the local peak of the number of votes is not formed. In other words, if the peak of the number of votes is not formed, it means that the target shape is not present in search area R.

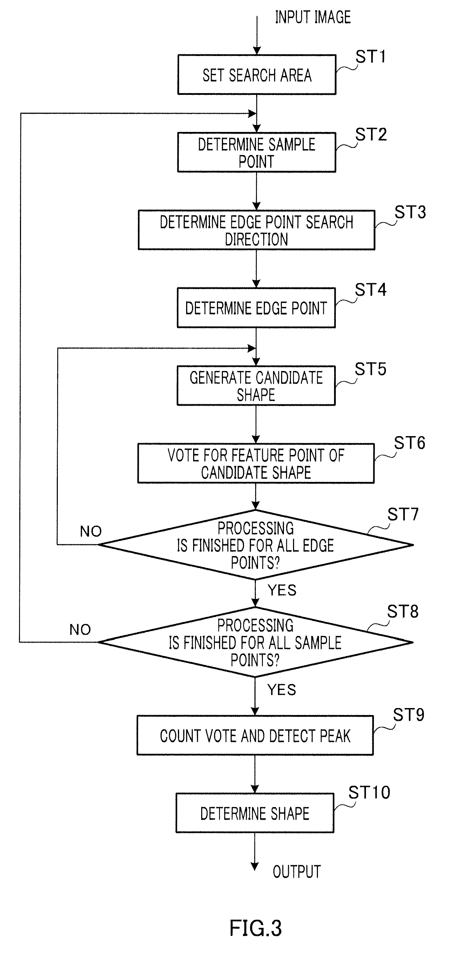

Next, the operations of image processing apparatus 100 of the present embodiment will be explained using FIG.3. Upon receiving as input an image, image processing apparatus 100 makes search area setting section 101 set the search area (step ST1). Next, sample point setting section 102 determines sample points (step ST2).

Next, candidate shape generating section 103 determines the search direction (designated direction) for searching for edges, based on target shape information (step ST3). Next, candidate shape generating section 103 searches for edge points in the image along the designated direction and determines the edge points (step ST4). Next, candidate shape generating section 103 generates shapes formed by straight lines passing the designated edge points, as candidate shapes of the target shape (step ST5).

Next, vote map generating section 104 finds feature points of the candidate shapes and further creates a vote map in which the feature point of each candidate shape is voted for.

Next, image processing apparatus 100 decides whether candidate shaping generating processing and voting processing are finished with respect to all edge points in the designated direction in the search area (step ST7), and the flow returns to step ST5 when these processing are not finished, and the flow proceeds to step ST8 when these processing are finished.

In step ST8, image processing apparatus 100 decides whether processing is finished with respect to all sample points set in the search area, and, when the processing is not finished, the flow returns to step ST2 and processing of steps ST2 to ST7 are performed with respect to the next sample point, and, when the processing is finished, the flow proceeds to step ST9.

In step ST9, vote map generating section 104 counts the vote results with respect to feature points found from all sample points and all candidate shapes, and shape feature point detecting section 105 detects the peak of the number of votes.

Next, in step ST10, shape feature point detecting section 105 determines the peak of the number of votes using a threshold, and, when the peak of the number of votes is greater than the threshold, determines that the feature point acquiring the peak is the feature point of the target shape. By this means, it is possible to determine that the target shape is present in the search area and further determine the position of the target shape based on the position of the feature point acquiring the peak.

Image processing apparatus 100 outputs information of the determined position of the feature point of the target shape or information of the position of the target shape to, for example, an automatic control apparatus and alarm apparatus of vehicles provided after shape feature point detecting section 105.

As described above, according to the present embodiment, image processing apparatus 100 employs a configuration having: sample point setting section 102 that sets a plurality of sample points in a search area; candidate shape generating section 103 that sets a plurality of designated directions depending on the target shape, searches for edge points in the image along the plurality of designated directions from sample points and generates candidate shapes formed with straight lines passing the detected edge points; vote map generating section 104 that generates a vote map in which the candidate shapes vote for positions of feature points of candidate shapes; and shape feature point detecting section 105 that determines the feature point of the target shape based on vote results with respect to the feature points in the vote map.

By this means, it is possible to detect or track a shape with respect to an image having low image quality or small sizes at high speed. That is, the target shape is detected based on the shape (edges) of an image, so that it is possible to detect or track even an image having low image quality or a small size as long as edges are provided. Further, even with an image having a low frame rate, that is, even with an image where the target shape changes significantly between the earlier frame and the current frame, it is possible to realize good shape tracking.

Further, edge points need to be detected only in the directions depending on the target shape, so that the amount of processing for detecting edge points is less. By this means, it is possible to perform fast shape detection or shape tracking. That is, generally, although edge points are found taking into account both the edge intensity in the horizontal direction and the edge intensity in the vertical direction, according to the present invention, edge points are found only in the designated directions, so that it is possible to reduce the amount of calculations significantly, particularly when search area R is large.

Here, image processing apparatus 100 according to the present embodiment directly utilizes sample points of a luminance image, that is pixel points, so that preprocessing needs not be performed for the overall image or search area. In addition, the same processing is performed with respect to all sample points, so that the algorithm is relatively easy. The time for implementing the present embodiment depends on the number of sample points.
Further, in the configuration according to the present embodiment, by adequately setting a search area and vote threshold, it is possible to control system efficiency. As a result of conducting experiment, when a camera mounted on a vehicle captures an image of the Japanese traffic sign for "stop," a personal computer having a CPU frequency of 1.8 [GHz] and memory capacity of 512 [MB] is utilized, and the number of sample points is set between 600 and 1000, the tracking time per frame is approximately 15 [msec], and it is possible to detect and track traffic signs in real time.

Further, although a case has been explained as an example with the present embodiment where the target shape is a regular triangle, the present invention is not limited to this and is applicable to an arbitrary triangle. In the case of an arbitrary triangle, for example, when the directions of the three sides are θ1, θ2 and θ3, the directions for searching for edge points from sample points need to be set θ1-90°, θ2-90° and θ3-90°, that is, the directions need to be set the directions vertical to the above-described three sides. The above-noted angles are generally between sides or their extended lines and the horizontal direction.

Further, although processing has been mainly explained with the above-noted present embodiment until the feature point of a target shape is detected, processing will be explained below taking into account the relationship between the feature point of the target shape and the target shape.

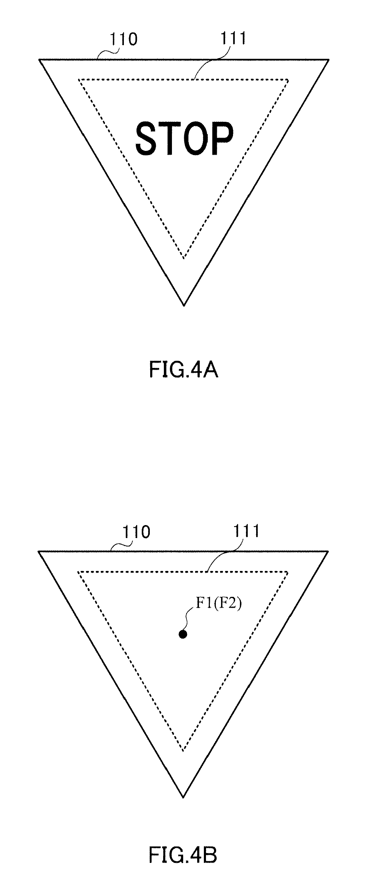

As the traffic sign of "stop" shown in FIG.4A, two inner and outer triangles 110 and 111 each comprised of parallel three sides may be present. In this case, as shown in FIG.4B, the centroids F 1 and F2 of two triangles 110 and 111 overlap (i.e., these centroids are located in the same position). Upon sign detection, two triangles should be taken into account without distinction, as in the present embodiment, it is preferable to detect or track the target shape by using the centroid as the feature point and detecting or tracking the centroid. On the other hand, a case may be preferable where two triangles 110 and 111 are distinguished and detected or tracked. In this case, upon voting for feature points, vote map generating section 104 may store the distances between the edge points (candidate shapes) that vote and the feature points that are voted for, and shape feature detecting section 105 may determine a feature point per distance taking into account the above-noted distance. That is, the centroid (feature point) F1 and the centroid (feature point) F2 in FIG.4B are detected as shape feature points of respective distance. Therefore, it is possible to detect or track two triangles 110 and 111 separately. Processing for finding a shape from the above-noted shape feature point can be performed in shape feature point detecting section 105 or can be performed in a shape determining section provided after shape feature point detecting section 105.

### (Embodiment 2)

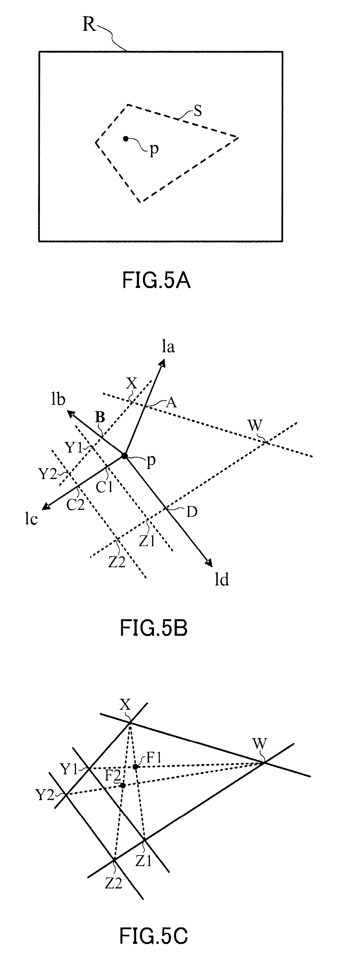

Although a case has been explained with Embodiment 1 where the target shape to be detected or tracked is a triangle, a case will be explained using FIG.5 with the present embodiment where the target shape to be detected or tracked is a quadrilateral.

FIG.5A illustrates search area R and quadrilateral S to be detected. To detect quadrilateral S, first, candidate shape generating section 103 searches for edge points along four directions starting from sample point p, that is, along directions la, 1b, 1c and 1d shown in FIG.5B.

Directions 1a, 1b, 1c and ld vertically pass the sides of quadrilateral S from the internal point. Generally, if the directions of the four sides of the quadrilateral are θ1, θ2, θ3 and 04, the directions of 1a, 1b, 1c and 1d are designated to θ1-90°, θ2-90° and θ3-90° and θ4-90°.

When edge points A, B, C1, C2 and D are detected from the four designated directions, candidate shape generating section 103 generates candidate quadrilaterals utilizing straight lines passing edge points A, B, C1, C2 and D vertically in the above-noted designated direction. In the case of FIG.5, quadrilateral XY1Z1W and quadrilateral XY2Z2W are generated as candidate quadrilaterals.

Next, as shown in FIG.5C, in vote map generating section 104, quadrilateral XY1Z1W and quadrilateral XY2Z2W vote for diagonal intersections F1 and F2, respectively. Subsequent processing is the same as in Embodiment 1, that is, the position of the feature point (i.e., the intersection of diagonals) of the target shape is determined by counting voted points from all candidate shapes generated in candidate shape generating section 103 based on all the sample points set in sample point setting section 102. Finally, if necessary, the position of the quadrilateral that is the target shape is specified utilizing the distance between the determined intersection and the edge points.

### (Embodiment 3)

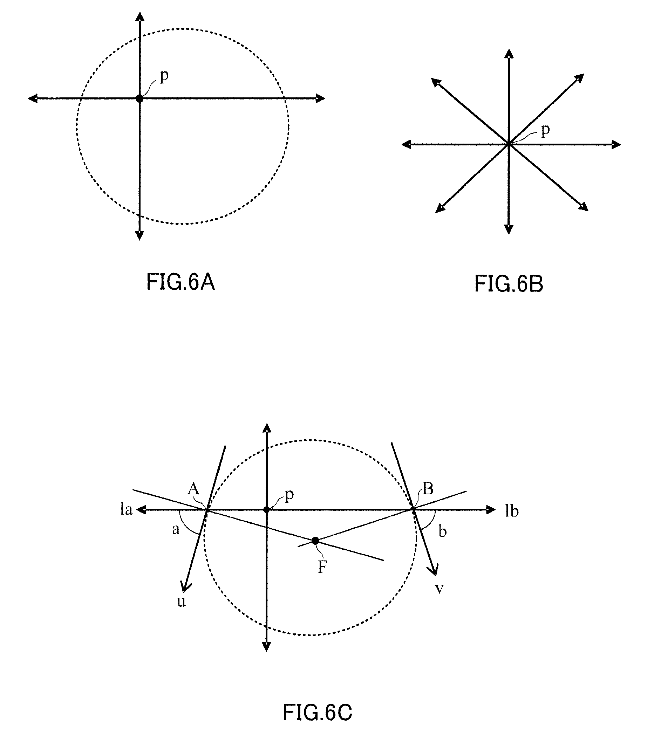

A case will be explained using FIG.6 where the target shape to be detected and tracked is a circle.

First, candidate shape generating section 103 sets designated directions for searching for edge points to a plurality of fixed directions. Generally, the designated directions preferably divide 360 degrees at regular intervals. For example, four directions shown in FIG.6A (0°, 9 0°, 1 80° and 270°) or eight directions shown in FIG.6B (0°, 45°, 90°, 135°, 180°, 225°, 270° and 315°) are selected. Further, more directions, for example, sixteen directions, can be designated.

Next, candidate shape generating section 103 searches for edge points in two opposing directions at the same time. For example, as shown in FIG.6C, edge points are searched for along designated direction la and designated direction 1b starting from sample point p. Upon detecting edge points A and B from designated directions la and 1b, respectively, candidate shape generating section 103 performs an examination using edge direction u for edge point A and edge direction v for edge point B. If the angle between edge direction u and edge direction la is expressed by "a," and the angle between edge direction v and edge direction 1b is expressed by "b," when the difference between angle a and angle b is greater than a threshold, edge point A and edge point B are not edge points the circle at the same time. When the difference between angle a and angle b is equal to or less than a threshold, candidate shape generating section 103 calculates intersection F of a straight line that passes edge point A and that is vertical to edge direction u and a straight line that passes edge point B and that is vertical to edge direction v, and makes intersection F a center candidate of the circle and makes FA or FB a radius candidate of the circle.

Vote map generating section 104 creates a vote map in which all sample points vote for the center candidate and the radius candidate, and shape feature point detecting section 105 determines the center point and radius of the circle to be detected or tracked, based on the vote result with respect to the center point candidate and radius candidate in the vote map.

Further, the difference between angle a and angle b may be corrected. For example, an average of angle a and angle b is calculated, edge direction u and edge direction v are rotated such that the difference between angle a and angle b is the average value, and, based on rotated edge direction u and edge direction v, the calculation of intersection F and other processing are performed.

### (Embodiment 4)

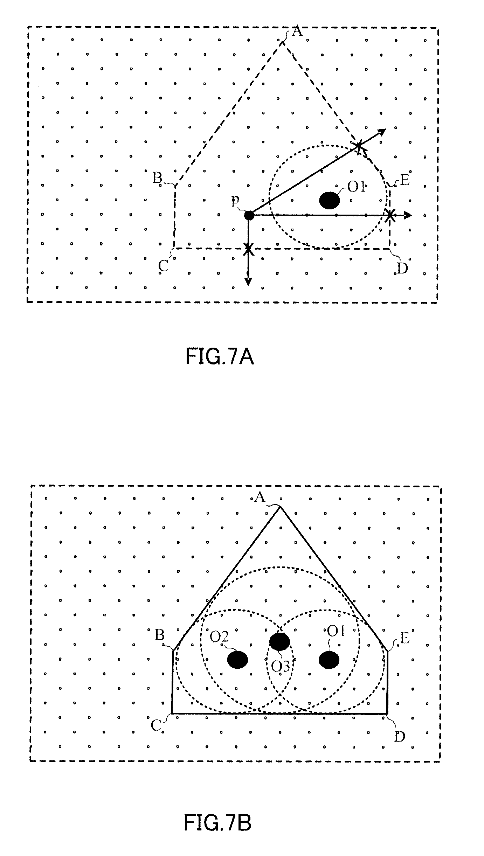

A method of detecting and tracking an arbitrary polygon will be explained with the present embodiment using FIG.7.

When the pentagon shown in FIG.7 is detected, a method other than in the above-described embodiments is needed. Here, there are two reasons. The first reason is that edge points need to be searched for from five designated directions, and, consequently, the amount of calculations increases, and there may be the possibility of not intersecting with the sides of the target shape even if edge points are searched for along the designated directions from sample points in the target shape. That is, correct edge points cannot be searched for from designated directions, and, consequently, the correct candidate shape cannot be generated. Such sample points are referred to as "invalid sample points." The second reason is that, when the number of sides of a polygon increases, normally, the number of invalid sample points described above increases rapidly.

A case will be explained where pentagon ABCDE shown in FIG.7A is detected. First, five sides are separated into a plurality of groups (partial shapes). For example, AE, DE and CD are classified into a first group, AB, BC and CD are classified into a second group and AB, AE and CD are classified into a third group. If these three groups are detected and feature point position of three groups are in a predetermined correlation, it is possible to determine a pentagon.

As a method for classifying a pentagon into groups, the technique of inscribed circle disclosed in Patent Document 4 can be utilized. That is, the group AE-DE-CD votes for the center point (feature point) of the inscribed circle of three sides using the method according to Embodiments 1 and 3, and, based on the vote result, the position of the center point and the radius of the inscribed circle for the group AE-DE-CD are detected. Similarly, in the group AB-BC-CD and the group AB-AE-CD, the center point and radius of the inscribed are detected. As a result, as shown in FIG.7B, three center points O1, 02 and 03 (feature points) can be detected. From the relative positions of O1, 02 and 03 and their radiuses, whether pentagon ABCDE is formed can be decided. In the case where a pentagon is formed, from the center points O1, 02 and 03 of the inscribed circle and each radius, it is preferable to determine the position of the pentagon.

Even with an arbitrary shape other than a pentagon, in the same way as above, it is preferable to classify the arbitrary shape into a plurality of groups based on inscribed circles. Further, the center point and radius of the inscribed circle of each group is detected by a method of voting, and whether the true shape (target shape) is formed is decided from the sizes of the inscribed circles and relative positions of the inscribed circles between groups. In the case where a target shape is formed, it is preferable to determine the position of the target shape from the center points and radiuses of the inscribed circles.

Explanations will be shown in further detail. In Embodiments 1 to 4, process of detecting and tracking shapes such as triangle, quadrilateral, pentagon and circle have been described. Normally, when the number of sides is equal to or less than five, the directions for searching for edge points are vertical to each side, and, consequently, the number of directions for search is equal to the number of sides.

However, as described above, with respect to a polygon having many sides, if edge points are searched for simply in directions vertical to the sides, it may deteriorate efficiency. That is, if the number of invalid sample points increases and the number of valid sample points for voting decreases, the method explained in the present embodiment is needed.

That is, the polygon is separated into a plurality of parts, and, first, the feature points of each part are detected or tracked. Further, the whole shape is detected or tracked based on the number of feature points that can be determined and relative positions of the feature points of the parts. As a method of separating a shape into parts, a plurality of sides having a common inscribed circle are classified into one part. In this case, the center point of the inscribed circle is a feature point of the vote target.

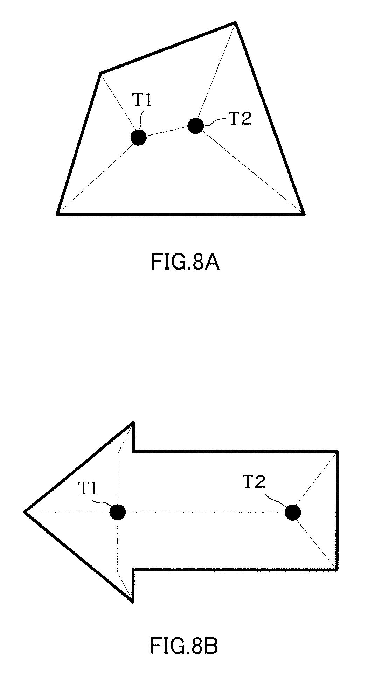

Up till now, skeleton extracting techniques are known in the field of image processing. Skeleton extracting techniques are disclosed in, for example, Non-Patent Document 1. To be more specific, a skeleton is made by the center point of the largest inscribed circle in the shape. The maximum inscribed circle is completely included in the shape, tangent to at least two sides of the shape and is not included in other inscribed circles. A skeleton is one of basic features of a shape. FIG.8 illustrates the skeletons (thin lines) of two shapes. In closed shape formed with straight lines, an inscribed circle having intersection on skeletons such as points T1 and T2 shown in FIG's.8A and 8B, as the center point of the inscribed circle, is tangent to the largest number of (at least three) sides of the shapes, and, consequently, these points are decided to have a large amount of geometric information. Therefore, it is preferable to utilize the inscribed circle associated with intersection of skeletons as the inscribed circle of the present embodiment.

The process described in the present embodiment is applicable to detection or tracking of an arbitrary polygon. Further, the process is applicable to a combined shape such as a shape formed by combining arch lines and a polygon.

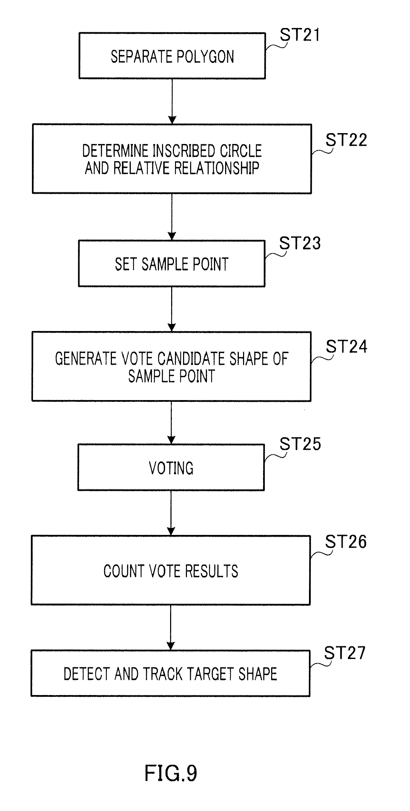

FIG.9 illustrates the steps of detecting or tracking arbitrary polygon according to the present embodiment. First, the target polygon is separated (step ST21). For example, the straight line parts and the curve line parts are separated. Next, the inscribed circle for the straight line parts is determined, and the geometrical relationship between the inscribed circle and the curve line parts is determined (step ST22). Next, sample points are set (step ST23). Next, edge points are searched for along the designated directions from the sample points, and candidate shapes (or feature points associated with candidate shapes) of the target shape are generated based on the detected edge points (step ST24). Next, voting is performed by the candidate shapes generated based on all sample points or by feature points of the candidate shapes (step ST25). Next, a plurality of vote results are counted to detect the local peak of votes (step ST26). Next, a partial shape is detected based on the voting peak, and, if a plurality of partial shapes are provided, relative relationships of the peak positions of the plurality of vote results is determined (step ST27). Further, in step ST27, based on the determined geometrical relationship between the straight line parts and the curve line parts, by examining whether the curve line parts are present and by deciding whether the target shape is present, the position of the target shape is determined.

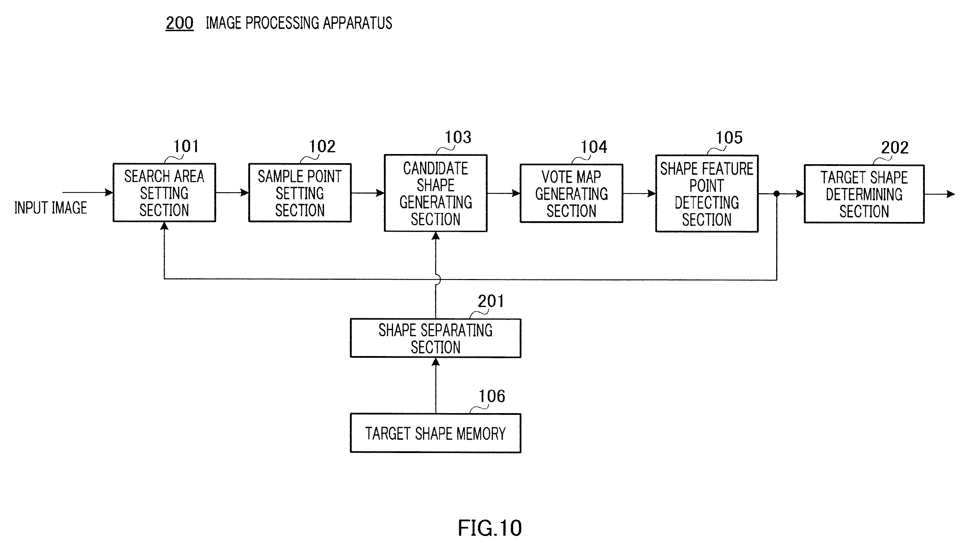

Here, the processing according to the present embodiment can be realized by using the configuration shown in FIG.10. In FIG.10, the same components as in FIG.1 are assigned the same reference numerals, and image processing apparatus 200 is further provided with shape separating section 201 and target shape determining section 202. Image processing apparatus 200 makes shape separating section 201 perform the processing in steps ST21 and ST 22. Further, the processing in step ST23 is performed in sample point setting section 102. The processing in step ST24 is performed in candidate shape generating section 103. The processing in step ST25 is performed in vote map generating section 104. The processing in step ST26 is performed in shape feature point detecting section 105. The processing in step ST27 is performed in target shape determining section 202.

The directions for searching for edge points and the number of directions may be or may not match the directions and number of sides of the target shape. However, if the directions for search and the number of directions match the directions and number of the sides of the target shape, it may be possible to detect or track a polygon better. That is, the number of search directions is three in the case of detecting a triangle, and the number of search directions is four in the case of a quadrilateral. In addition, it is preferable that the search directions are each vertical to the sides of a polygon. To handle an arbitrary polygon, as described above, it is preferable to separate the polygon based on inscribed circles and vote for intersection of skeletons.

If the directions for searching for edge points and the number of directions match the directions and number of sides of the target shape, the adaptive target is limited. Consequently, although versatility is poor, the search directions are limited, so that a calculation is easy and the execution speed is fast. On the other hand, if the directions for searching for edge points and the number of directions match the directions and number of sides of the target shape (e.g., in the case where the number of search directions is fixed to ten), although versatility is secured, the accuracy for a specified target is low and the amount of calculations is large.

As described above, according to the present invention, after the target shape is detected once, it is possible to limit the search range for the shape and realize tracking. The method and apparatus of the present invention is available even when edge points are detected only in part of sample points (i.e., even when voting can be performed accurately by only part of sample points), so that the method and apparatus have strong robustness with respect to a hidden image, an image with noise or an image having vague edges (i.e., an image having low image quality or small sizes).

Further, according to the present invention, a luminance image is processed directly, so that image improvement, noise deletion, edge processing and such need not be performed in the whole image or in a search area. Further, only edge points that are present in the designated directions from a sample point are calculated, so that the present invention provides the fast calculation speed and strong robustness.

Further, according to the present invention, only edge points in the designated directions are handled based on the sides of the target shape, so that it is possible to adequately select the filter for edge calculation. Further, candidate shapes are formed by normally finding edge points in at least three directions from one sample point, so that there is little error detection due to edge points in other shapes than the target shape.

Furthermore, each function block employed in the description of each of the aforementioned embodiments may typically be implemented as an LSI constituted by an integrated circuit. Further, each function block can be implemented by computer program.

The disclosure of Chinese Patent Application No.200710148756.0, filed on September 11, 2007, including the specification, drawings and abstract, is incorporated herein by reference in its entirety.

### Industrial Applicability

The present invention provides advantages of being able to perform fast shape detection or fast shape tracking from an image having low image quality or small sizes, and is widely suitable to vehicle traffic sign recognition systems, robot navigations, building detecting apparatuses by remote sensing and such.

## Claims

1. An image processing apparatus comprising:
a search area setting section that sets a search area from a captured image;
a sample point setting section that sets a plurality of sample points in the search area;
a candidate shape generating section that sets a plurality of designated directions according to a target shape, searches for edge points in the image along the plurality of designated directions from the sample points, and generates candidate shapes formed with straight lines passing the edge points detected;
a vote map generating section that generates a vote map in which the candidate shapes vote for positions of feature points of the candidate shapes; and
a shape feature point detecting section that determines a feature point of the target shape based on a vote result for the feature points in the vote map.

2. The image processing apparatus according to claim 1, wherein the plurality of designated directions set in the candidate shape generating section are vertical to sides of the target shape.

3. The image processing apparatus according to claim 1, wherein the plurality of designated directions set in the candidate shape generating section divide 360 degrees at regular intervals.

4. The image processing apparatus according to claim 1, wherein, when the target shape is a triangle, the feature point is a centroid or orthocenter of the triangle.

5. The image processing apparatus according to claim 1, wherein, when the target shape is a convex quadrilateral, the feature point is an intersection of diagonals of the convex quadrilateral.

6. The image processing apparatus according to claim 1, further comprising a shape determining section that determines a position of the target shape in the captured image based on the feature point determined in the shape feature point determining section.

7. The image processing apparatus according to claim 1, further comprising a shape separating section that separates the target shape into partial shapes comprising part of sides of the target shape, wherein:
the candidate shape generating section sets a plurality of designated directions according to the partial shapes and generates candidate shapes of the partial shapes; and
the shape feature point detecting section determines feature points of the partial shapes based on a vote result for the feature points of the partial shapes in the vote map.

8. The image processing apparatus according to claim 6, further comprising a shape separating section that separates the target shape into partial shapes comprising part of sides of the target shape, wherein:
the candidate shape generating section generates the candidate shape per partial shape;
the shape feature point detecting section determines the feature point per partial shape; and
the shape determining section determines a position of the target shape in the captured image based on the feature point determined per partial shape.

9. An image processing method comprising the steps of:
setting a search area from a captured image;
setting a plurality of sample points in the search area;
setting a plurality of designated directions according to a target shape;
searching for edge points in the image along the plurality of designated directions from the sample points;
generating candidate shapes formed with straight lines passing the edge points detected;
generating a vote map in which the candidate shapes vote for positions of feature points of the candidate shapes; and
determining a feature point of the target shape based on a vote result for the feature points in the vote map.
